# EUROPÄISCHE PATENTANMELDUNG

(11) **EP 4 324 705 A1**
(43) Veröffentlichungstag der Anmeldung: **21.02.2024**
(21) Anmeldenummer: 22191170.4
(22) Anmeldetag: 19.08.2022
(51) Int. Cl.: B60R 16/02, B60J 5/06, E05F 15/632, H02G 11/02

(54) **WICKELROLLE ZUR AUF- UND ABWICKLUNG EINES ELEKTRISCHE ENERGIE UND/ ODER SIGNALE ÜBERTRAGENDEN KABELS EINER SCHIEBETÜRANLAGE**

(71) Anmelder: LANDERT Group AG, 8180 Bülach (CH)
(72) Erfinder: SCHERRER, Thierry, 8180 Bülach (CH); SCHÜTZ, Johannes, 8180 Bülach (CH)
(74) Vertreter: Riebling, Peter

(57) **Zusammenfassung**

Wickelrolle (8) zur Auf- und Abwicklung eines elektrische Energie und Signale übertragenden Kabels (2) einer Schiebetüranlage, wobei das Flachbandkabel (2) eine stationäre Steuerungseinrichtung mit mindestens einem bewegbar gelagerten Schiebetürflügel (3, 4) elektrisch leitfähig verbindet, wobei der Schiebetüranlage ein Elektromotor zugeordnet ist, der auf einen in Öffnungs- und Schließrichtung angetriebenen Antriebsriemen (5) für den Verschiebeantrieb der Schiebetürflügel (3, 4) arbeitet, und dass der Antriebsriemen (5) als Abrollantrieb für das Flachbandkabel (2) ausgebildet ist.

## Beschreibung

Gegenstand der Erfindung ist eine Wickelrolle zur Auf- und Abwicklung eines elektrische Energie und Signale übertragenden Kabels einer Schiebetüranlage nach dem Oberbegriff des Patentanspruches 1.

Eine Schiebetüranlage, welche meist automatisch betrieben wird, besteht bevorzugt aus zwei Schiebetürflügeln die motorisch gegenläufig angetrieben sind. Hierzu sind die Schiebetürflügel über einen Antriebsriemen miteinander verbunden und über Rollenwagen in einer horizontalen ortsfesten Laufschiene verschiebbar geführt.

Die Laufschiene ist Teil eines Trägerelements, welches oberhalb der Türöffnung zur Aufnahme der einzelnen Komponenten der Schiebetüranlage ortsfest angeordnet ist.

Der Antrieb der Schiebetürflügel weist einen Elektromotor auf, der mit einer elektronischen Steuereinrichtung verbunden ist. Der Motor treibt über ein Getriebe und mindestens einer ersten Umlenkrolle den Antriebsriemen an, der über eine zweite freilaufende Umlenkrolle umlaufend geführt ist. Ein derartiger Antrieb ist beispielsweise in der DE 196 44 485 B4 dargestellt.

An dem Antriebsriemen sind ein oder mehrere Laufwagen befestigt, von denen jeder im Innenraum des in Längsrichtung des Antriebsriemens sich erstreckenden Trägerelements abrollt, wobei am jeweiligen Laufwagen ein Schiebetürflügel befestigt ist. Alternativ kann ein Schiebetürflügel auch mehr als einen Laufwagen aufweisen.

Die Schiebetürflügel sind über Mitnehmer mit dem Antriebsriemen gekoppelt. Hierzu ist beispielsweise das untere Trum des Antriebriemens über einen Mitnehmer mit dem linken Schiebeflügel und das obere Trum über einen Mitnehmer mit dem rechten Schiebeflügel verbunden, so dass sich die Flügel nur in jeweils entgegengesetzten Richtungen bewegen können.

Die Ansteuerung des Elektromotors erfolgt über die Steuereinrichtung, die beispielsweise in dem Trägerelement angeordnet ist. Auf das Signal eines an oder in mindestens einem Türflügel angebrachten Sensors oder eines Schalters werden die Schiebeflügel über den Elektromotor geöffnet und nachfolgend wieder geschlossen.

Da der Sensor und/oder Schalter in dem beweglichen Türflügel integriert ist, ist eine kabelgebundene Verbindung mit der ortsfesten Steuer- und Regeleinrichtung erforderlich, um Energie oder Daten bzw. Signale zu übertragen. Oft kommen hierfür Kabelführungssysteme zum Einsatz, wie sie beispielsweise in der EP 2 172 370 A1 offenbart sind. Das Kabel, hier ein Flachbandkabel, wir lose über mindestens zwei Führungsblöcke geführt, damit es beim Schließen der Schiebetüre nicht eingeklemmt wird. Eine solche Lösung ist jedoch für eine zweiflüglige Schiebetüranlage aufgrund der losen Kabelführung nicht geeignet.

Aus dem Automobilbereich sind Kabelrollmechanismen bekannt, die eine kontrollierte Auf- und Abwicklung eines Flachbandkabels bei einem handbetriebenen Schiebetürflügel in Kraftfahrzeugen ermöglichen. So zeigt die gattungsbildende EP 3 582 353 A1 eine Wickelrolle, wobei im Inneren der Wickelrolle eine Vielzahl von Rollen zum Einsatz kommen, die das von außen zugeführte Kabel auf einem inneren Wickelkern aufrollen. Diese Wickelrolle ist jedoch nicht für motorisch angetriebene Doppelflügel-Schiebetüren geeignet, bei denen beide Türflügel mit einem Flachbandkabel verbunden sein müssen und zudem eine vereinfachte Montage erforderlich ist. Ein besonders ausgebildeter Abrollmechanismus für das Flachbankkabel ist aus dieser Druckschrift nicht zu entnehmen.

Der Erfindung liegt deshalb die Aufgabe zugrunde, einen Kabelrollmechanismus für ein signal- und energieführendes Kabel bei Schiebetüren so weiterzubilden, dass ein vereinfachter Abrollmechanismus vorhanden ist.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Vorteilhaftes Merkmal ist, dass der Schiebetüranlage ein Elektromotor zugeordnet ist, der auf einen in Öffnungs- und Schließrichtung angetriebenen Antriebsriemen für den Verschiebeantrieb der Türflügel arbeitet, wobei der Antriebsriemen als Abrollantrieb für das Flachbandkabel ausgebildet ist.

Damit wird dem Antriebsriemen eine Doppelfunktion zugeordnet, nämlich zum Antrieb der Türflügel und zur Ausbildung eines besonderen Abrollmechanismus für das Flachbandkabel.

Wenn in der folgenden Erfindungsbeschreibung der Begriff "Kabel" auf ein "Flachbandkabel" bezogen ist, so ist dies nicht einschränkend zu verstehen. Die Erfindung ist lediglich in einer bevorzugten Ausführung darauf gerichtet, den Abrollmechanismus aus einer Wickelrolle zu vereinfachen und zu verbessern. Der Begriff "Kabel" kann deshalb auch als "Rundkabel" verstanden werden oder allgemein als elektrischer Leiter.

Durch den aktiven Antrieb des Kabels bei dessen Abrollung wird gewährleistet, dass das Kabel stets mit definierter Abrollkraft unter Vermeidung von Antriebsspitzen knick- und spannungsfrei abgerollt werden kann. Nachdem der Antriebsriemen die Laufwagen der Schiebtürflügel antreibt erfolgt damit auch ein synchroner Antrieb des Flachbandkabels. Damit kann auch auf einen aktiven Drehantrieb des Wickelkerns verzichtet werden und die Aufrollung des Kabels im Wickelkern erfolgt bevorzugt durch die Rückstellkraft eines Kraftspeichers bevorzugt eines Federkraftspeichers und besonders bevorzugt durch eine Triebfeder.

Bevorzugt ist für den Abrollantrieb des Flachbandkabels das obere Trum des Antriebsriemens mit einem ersten Abschnitt des Flachbandkabels verbunden ist und dass das untere Trum des Antriebsriemens mit einem Ende des Flachbandkabels verbunden ist. Das andere Ende des Flachbandkabels ist dabei auf der zentralen feststehenden Achse des Wickelkerns befestigt ist und danach außen geführt ist.

In einer alternativen Ausführungsform ist das Kabel unabhängig vom Antriebsriemen geführt und umgelenkt.

Die Wickelrolle weist einen äußeren und einen inneren Wickelkern auf, auf denen das Flachbandkabel je nach Öffnungs- oder Schließbewegung des mindestens einen Türflügels auf- oder abwickelbar ist.

Das Flachbandkabel ist hierbei zwischen dem äußeren und dem inneren Wickelkern fixiert ist.

Dies erfolgt bevorzugt mit einer Wickelrolle bei der durch eine optimierte Kabelführung eine montage- und wartungsfreundliche Anwendung an einer Schiebetüranlage mit mindestens zwei Türflügeln möglich ist.

Bevorzugtes Merkmal ist, dass die Wickelrolle im Bereich des Trägerelements montiert ist und einen äußeren und einen inneren Wickelkern aufweist, auf denen das Kabel je nach Öffnungs- oder Schließbewegung des mindestens einen Türflügels auf- oder abwickelbar ist.

Bevorzugt weist die Wickelrolle zwei Wickelkerne auf, wobei der äußere Wickelkern von der äußeren Oberfläche der Wickelrolle gebildet wird und der innere Wickelkern ein von der äußeren Oberfläche radial beabstandetes hohles, zylindrisches Kernelement bildet, das ebenfalls eine Oberfläche aufweist. Es handelt sich somit um zwei konzentrische, hohle zylindrische Kernelemente mit jeweils einer äußeren Oberfläche und einem ersten und einem zweiten Ende in axialer Richtung. Auf diesen Oberflächen kann das Kabel auf- oder abgewickelt werden.

Der innere Wickelkern wird durch eine hohle zylindrische Achse gebildet, welche drehfest in dem Trägerelement gelagert ist. Durch diese mittige Achse wird auch die Drehachse der Wickelrolle gebildet. Zunächst wird das von der Steuerungseinrichtung kommende Kabel von außen durch eine hohle Achse in das Innere der Wickelrolle geführt.

Um den Wickelvorgang zu ermöglichen, wird ein Abschnitt des Kabels am jeweiligen Wickelkern befestigt, wobei das Kabel meist in einer Schlitzführung eingeklemmt wird. Dann wird der Wickelkern um seine Achse gedreht, um das Kabel zu einer Kabelrolle zu wickeln.

Ein weiteres Merkmal einer bevorzugten Ausführungsform der Erfindung ist, dass sowohl die Achse als auch der Außenumfang der Wickelrolle einen Schlitz aufweisen, durch welchen das Kabel geführt ist. Aufgrund der Klemmung des Kabels in dem Schlitz der inneren Achse und dem Schlitz im Außenumfang der Wickelrolle bleibt die Länge des Kabels im Inneren der Wickelrolle gleich.

Durch diese Fixierung ist eine kontrollierte Auf- bzw. Abwicklung auf den jeweiligen Wickelkern möglich und es wird verhindert, dass das Kabel, insbesondere während des Wickelns und Abwickelns, vom äußeren Wickelkern rutscht.

Befindet sich die Schiebetüranlage im geöffneten Zustand, d.h. dass beide Türflügel maximal voneinander beabstandet sind, dann ist das Kabel vom äußeren Wickelkern abgerollt. Dies kann in einer Ausführungsform bedeuten, dass keine Wicklung des Kabels mehr auf dem äußeren Wickelkern verbleibt.

Gleichzeitig ist das Kabel im Inneren der Wickelrolle, aufgrund der Klemmung zwischen den beiden oben genannten Schlitzen, in der Länge unverändert. Lediglich die Anzahl der Wicklungen verändert sich, sowie der Abstand der einzelnen Wicklungen zum inneren Wickelkern, der sich aufgrund der spiralförmigen Lagerung des Kabels in radialer Richtung vergrößert.

In einer weiteren Ausführungsform ist die Wickelrolle schräg gegenüber dem mindestens einem Türflügel montiert. Somit wird die Kabelführung zwischen Wickelrolle und Antriebsriemen verbessert.

Dazu kann unterstützend, in einer Weiterbildung dieser Ausführungsform, zwischen Wickelrolle und Antriebsriemen eine Führungsrolle drehbar gelagert sein, über die das Kabel geführt ist. Somit wird das von der schräg gelagerten Wickelrolle kommende Kabel in Richtung des in einer vertikalen Ebene verlaufenden Antriebsriemens umgelenkt.

In einer dazu alternativen Ausführungsform wird anstatt einer Führungsrolle ein nicht drehbares d.h. unbewegliches Führungelement, wie z.B. ein Gleiter verwendet.

Bevorzugt liegt das Kabel auf dem Antriebsriemen auf und ist kraftübertragend mit diesem verbunden. Der Antriebsriemen ist in herkömmlicher Weise über zwei gegenüberliegende Umlenkrollen geführt und weist ein oberes Trum und ein unteres Trum auf.

Das Kabel kann hierbei sowohl mit dem oberen als auch mit dem unteren Trum verbunden sein. Bei einer Verbindung mit dem unteren Trum ist das Kabel ebenfalls um eine Umlenkrolle geführt, wobei es sich bevorzugt um die der Wickelrolle entfernteste Umlenkrolle handelt.

Im Bereich einer Koppelstelle verbindet ein Verbindungskabel das Kabel mit einem Steckerelement, welches eine lösbare Verbindung zum Türflügel herstellt. Diese Koppelstelle kann sich sowohl am oberen Trum als auch am unteren Trum befinden. So kann beispielsweise die Koppelstelle am oberen Trum eine Verbindung zum rechten Türflügel ermöglichen und die Koppelstelle am unteren Trum eine Verbindung zum linken Türflügel.

Der äußere Wickelkern wird gebildet durch den Außenumfang der Wickelrolle und wird von seitlichen, in radialer Richtung hervorstehenden Stegen begrenzt.

Auf dem Außenumfang der Führungsrolle ist das Kabel geführt, wobei der Außenumfang von zwei seitlichen, in radialer Richtung hervorstehenden Stegen seitlich begrenzt ist.

Der Außenumfang der Wickelrolle und der Führungsrolle werden somit von seitlichen Stegen begrenzt. Diese befinden sich am Rand der jeweiligen Kreisscheibe und verhindern ein Abrutschen des Kabels und ermöglichen zudem eine Kompensation möglicher Verdrehungen des Kabels entlang seiner Längsachse.

Bedingt durch die Anzahl der Wicklungen um den äußeren Wickelkern kann sich der Durchmesser der Wickelrolle verringern oder vergrößern. Da sich bei einem größeren Wickeldurchmesser gegenüber einem kleineren Wickeldurchmesser das Kabel in einer anderen Position gegenüber dem Antriebsriemen befindet, kann dieser Versatz durch die Führungsrolle ausgeglichen werden.

Ein weiteres Merkmal einer bevorzugten Ausführungsform der Erfindung ist, dass durch eine Triebfeder welche ebenfalls mit der zentralen Achse der Wickelrolle verbunden ist, eine notwendige und unterstützende Rückstellkraft aufgebracht werden kann, um das Aufwickeln des Kabels bei Schließen der Schiebetüranlage zu unterstützen. Bei der Triebfeder handelt es sich um eine in einer Ebene spiralförmig gewundene Biegefeder.

Die erfindungsgemäße Kabelzuführung, welche mindestens eine Wickelrolle aufweist, kann bei jeglicher Art von Tür eingesetzt werden, wie z.B. Schiebetür, Faltflügel, usw..

Auch ist eine Verwendung der Wickelrolle für z.B. Schiebetüren mit Laufrollen am Boden, oder Schiebetüren ohne Antrieb möglich.

Die vorliegende Erfindung ist nicht auf die Anwendung bei einer automatischen beschränkt. Auch bei einer manuell betätigbaren Schiebetüre kann eine erfindungsgemäße Wickelrolle zum Einsatz kommen.

Auch ist es nicht zwingend notwendig, dass die Türflügel über einen Antriebsriemen miteinander verbunden sind.

Auch ist es nicht zwingend notwendig, dass die Türflügel über Rollenwagen in einer horizontalen ortsfesten Laufschiene verschiebbar geführt sind.

Auch ist es nicht zwingend notwendig, dass die Türflügel einen oder mehrere Laufwägen aufweisen, da sie direkt mit einer oder mehreren Laufrollen verbunden sein können.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine Vorderansicht der Schiebetüranlage
- Figur 2:: eine Seitenansicht der Wickelrolle
- Figur 3:: eine Seitenansicht der Wickelrolle in reduzierter Darstellung
- Figur 4:: die Ansicht nach Figur 1 in reduzierter Darstellung
- Figur 5:: eine Detailansicht der Koppelstellen
- Figur 6:: eine perspektivische Darstellung der Wickel und Führungsrolle
- Figur 7:: eine Vorderansicht der Wickel- und Führungsrolle
- Figur 8:: eine geschnittene Darstellung der Wickelrolle (1. Ebene)
- Figur 9:: eine geschnittene Darstellung der Wickelrolle (2. Ebene)
- Figur 10:: eine perspektivische Vorderansicht der Wickelrolle
- Figur 11:: eine perspektivische Rückansicht der Wickelrolle
- Figur 12:: eine Explosionsansicht der Wickelrolle

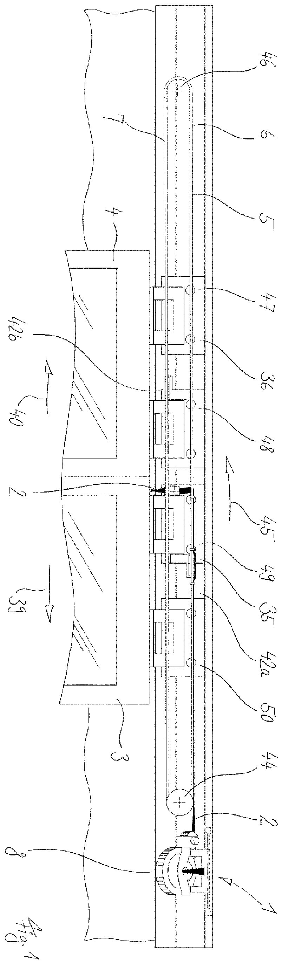

Figur 1 zeigt einen Kabelrollmechanismus 1 zur Aufwicklung eines Kabels 2, welches in dem hier gezeigten Beispiel als Flachbandkabel ausgebildet ist. Das Kabel 2 ist mit einem Antriebsriemen 5 gekoppelt, der zum Öffnen und Schließen der Türflügel 3, 4 dient. Der Antriebsriemen 5 ist über zwei Umlenkrollen 44 geführt, wobei in Figur 1 nur die rechte Umlenkrolle 44 dargestellt ist. Die linke Umlenkrolle wird nur durch den Umlenkpunkt 46 angedeutet, der neben dem Antriebsriemen 5 auch das mit dem Antriebriemen verbundene Kabel 2 umlenkt.

Zwischen den Umlenkrollen verläuft der Antriebsriemen 5 mit einem oberen Trum 6 und einem unteren Trum 7.

Mit dem oberen Trum 6 ist der rechte Laufwagen 35 gekoppelt, der sich bei einer Öffnungsbewegung in Pfeilrichtung 39 bewegt, so wie auch der damit verbundene Türflügel 3.

Mit dem unteren Trum 7 ist der linke Laufwagen 36 gekoppelt, der sich bei einer Öffnungsbewegung der Schiebetür in Pfeilrichtung 40 bewegt, so wie auch der damit verbundene Türflügel 4.

Das Ende des Kabels 2 ist über die Koppelstelle 42b mit dem linken Laufwagen 36 verbunden. Die Koppelstelle 42b befindet sich am unteren Trum 7.

Der Laufwagen 35 ist über die Koppelstelle 42a mit einer kurzen Teilstrecke des Kabels 2 verbunden, wobei sich die Koppelstelle 42a am oberen Trum 6 befindet.

Bewegt sich das obere Turm 6 des Antriebriemens 5 in Pfeilrichtung 45, z.B. zum Schließen der Schiebetüranlage, wird auch das Kabel 2 aufgrund seiner Kopplung mit dem Antriebsriemen 5 ebenfalls in Pfeilrichtung 45 mitbewegt und von der Wickelrolle 8 abgerollt.

Der linke Laufwagen 36 weist die beiden Rollenaufnahmen 47, 48 auf, welche jeweils ein Paar von Laufrollen aufweist. Der rechte Laufwagen 35 weist die beiden Rollenaufnahmen 49, 50 auf, welche ebenfalls ein Paar von Laufrollen aufweist.

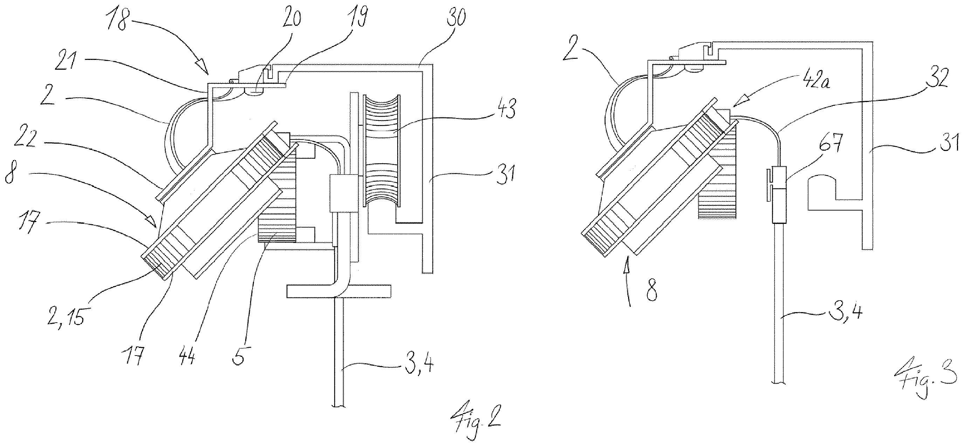

Figur 2 zeigt die Wickelrolle 8, die schräg gegenüber dem Türflügel 3, 4 an einer Montageplatte 22 aufgehängt ist. Die Montageplatte 22 ist in einem Winkel von ca. 45° gegenüber der Ebene der Türflügel 3, 4 ausgerichtet und an einem vertikalen Schenkel 21 der Aufhängung 18 befestigt.

Diese Aufhängung 18 besteht zudem aus einer mit dem Schenkel 21 werkstoffeinstückig verbundenen, horizontalen Montageplatte 19, die über die Schraubverbindung 20 mit der Profilschiene 30 verbunden ist. An dieser Profilschiene 30 schließt sich im unteren Bereich die abgewinkelte Profilschiene 31 an, die zur Aufnahme und Abrollung der Laufrolle 43 eines Laufwagens 35, 36 dient. Die Profilschiene 30, 31 sind Bestandteile des Trägerelements.

Die Wickelrolle 8 bildet mit seinem Außenumfang einen äußeren Wickelkern 15, auf dem das Kabel 2 aufgewickelt ist. Der Wickelkern 15 wird von zwei seitlichen Stegen 17 begrenzt, die eine Aufwicklung des Kabels 2 vereinfachen.

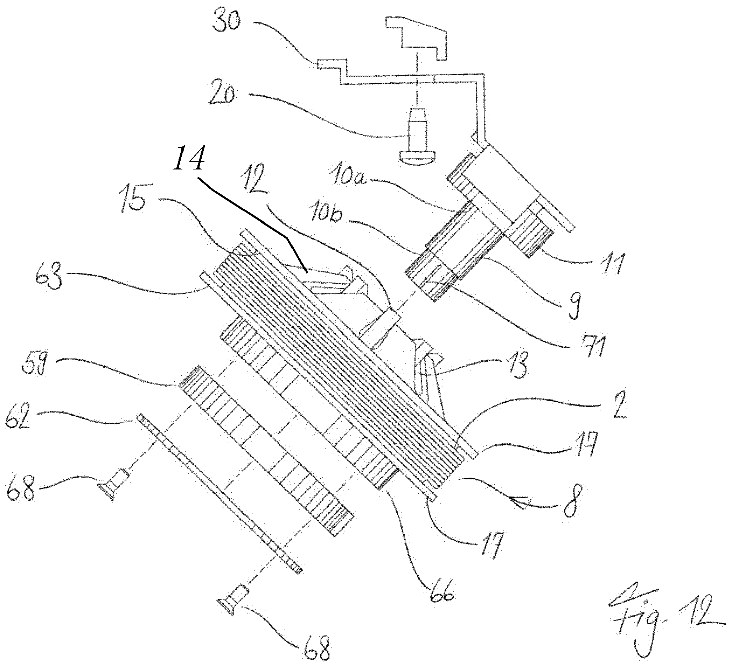

Das Kabel 2 wird zunächst über die Aufhängung 19, 21, 22 geführt und mittig in die Wickelrolle 8 eingeleitet. Der dort befindliche innere Wickelkern 29 ist in Figur 12 dargestellt und wird gebildet von der Achse 9. Aus dem Innenraum der Wickelrolle wird das Kabel über einen in Figur 2 nicht sichtbaren Schlitz an den äußeren Wickelkern 15 geführt.

Von dem äußeren Wickelkern 15 wird dann das Kabel 2 in Richtung des Antriebriemens 5 geführt, der gemäß Figur 2 um die Umlenkrolle 44 verläuft. Das Kabel 2 ist dabei mit dem Antriebriemen 5 verbunden.

Figur 3 zeigt eine reduzierte Ansicht von Figur 2 und wie von der Koppelstelle 42a, b ein Verbindungskabel 32 in Richtung des Türflügels 3, 4 geführt ist, um Energie oder Daten bzw. Signale zu übertragen. Dazu ist am Ende des Verbindungskabels 32 ein Steckerelement 67 vorhanden.

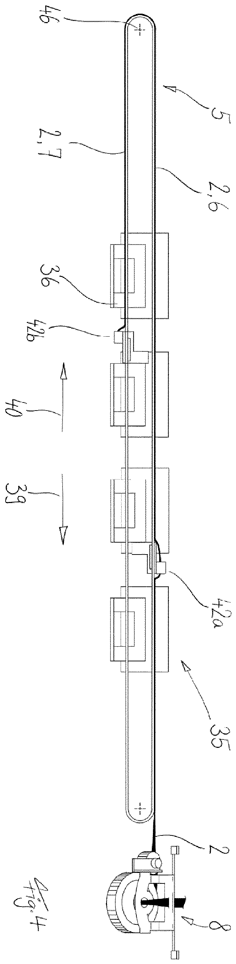

Figur 4 zeigt eine freigeschnittene Darstellung von Figur 1, aus der sich insbesondere die Koppelstelle 42a mit dem oberen Trum und die Koppelstelle 42b mit dem unteren Trum 7 ergibt, über die eine Verbindung zwischen Kabel 2 und Türflügel 3, 4 ermöglicht wird.

Das Kabel 2 wird ausgehend von der Wickelrolle 8 in Richtung des Antriebriemens 5 geführt. Dabei liegt das Kabel auf dem oberen Trum 6 auf und durchläuft die Koppelstelle 42a, von wo bereits Energie oder Daten übertragen werden können.

Nach der Koppelstelle 42a verläuft das Kabel weiterhin auf dem oberen Trum 6, wird um den Umlenkpunkt 46 geleitet und läuft hier mit dem unteren Trum 7 weiter bis zur Koppelstelle 42b, wo das Kabel 2 endet.

Figur 4 zeigt die maximale Abrollung des Kabels 2 von der Wickelrolle 8, während sich die Schiebetüre in Schließstellung befindet. Durch die Koppelstellen 42a, b besteht sowohl mit dem oberen Trum 5 verbundene Laufwagen 35 als auch mit dem unteren Trum verbundene Laufwagen 36 eine Verbindung.

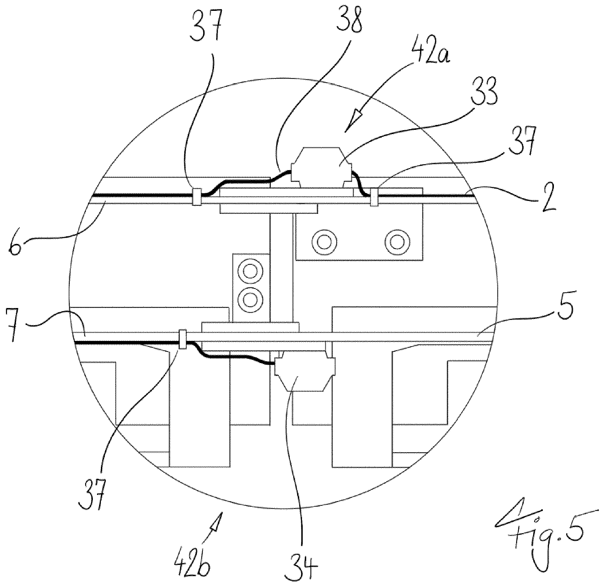

Figur 5 zeigt eine Detailansicht der Koppelstellen 42a, b wobei aus Vereinfachungsgründen und zur besseren Veranschaulichung die beiden Koppelstellen übereinander angeordnet sind. Das Kabel 2 ist mittels den Befestigungsklammern 37 mit dem oberen Trum 6 und dem unteren Trum 7 verbunden. Die Befestigungsklammern 37 auf dem oberen Trum 6 ermöglichen eine Schlaufenbildung (Kabelschlaufe 38) des Kabels 2, so dass dieses durch ein Steckerelement 33 geführt werden kann.

Nach der Befestigungsklammer 37 am unteren Trum 7 hebt sich das Kabel 2 vom Antriebsriemen 5 ab, ist in das Steckerelement 34 eingeführt und endet dort.

Durch die Verwendung der Steckerelemente 33, 34 lässt sich das Kabel 2 leicht mit den Laufwagen 35, 36 verbinden.

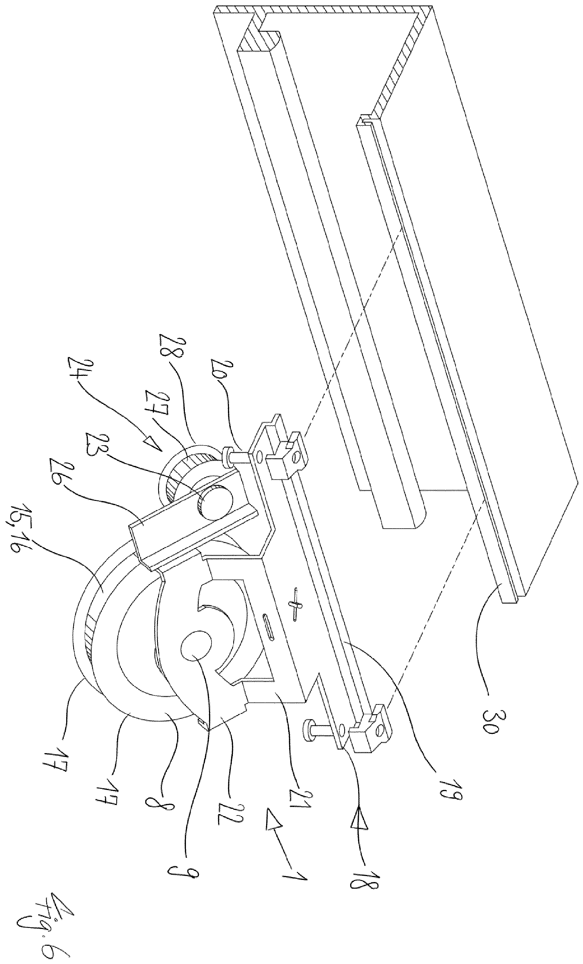

Figur 6 zeigt eine Explosionszeichnung der Aufhängung der Wickelrolle 8. Die Wickelrolle 8 ist über die Achse 9 drehbar mit der schrägen Montageplatte 22 verbunden. Die Achse 9 ist hohl, um die Einführung des Kabels 2 in das Innere der Wickelrolle 8 zu ermöglichen.

An der Montageplatte 22 ist, ebenfalls schräg, die Aufhängung 26 der Führungsrolle 24 montiert. An der Aufhängung ist die Führungsrolle 24 drehbar mittels der Achse 23 gelagert und durch die ebenfalls schräge Montage der Aufhängung 26 ist auch die Führungsrolle 24 schräg gegenüber der Ebene, in der die Türflügel 3, 4 verlaufen, ausgerichtet.

Die Führungsrolle 34 bildet mit ihrem Außenumfang eine Abrollfläche 27, die von zwei seitlichen Stegen 28 begrenzt ist.

Aus Figur 6 lässt sich zudem die Schraubverbindung 20 entnehmen, über die die horizontale Montageplatte 19 mit der ebenfalls horizontalen Profilschiene 30 verschraubt ist. Die Montageplatte 19 ist Teil der Aufhängung 18, zu der auch der vertikale Schenkel 21 gehört, an dem die schräge Montageplatte 22 angeschraubt ist.

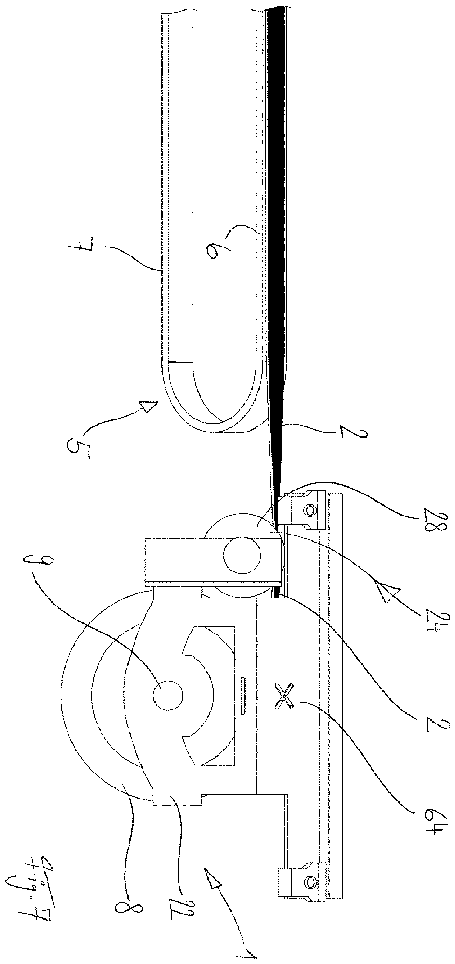

Figur 7 zeigt eine Draufsicht auf die Wickelrolle 8, welche über die Achse 9 drehbar in einem kreisförmigen Flächenbereich der Montageplatte 22 gelagert ist. Neben der Montageplatte 22 ist die Führungsrolle 24 drehbar gelagert. Die Führungsrolle 24 führt das von der Wickeltrommel 8 kommende Kabel 2 in Richtung des oberen Trums 6. Bedingt durch die seitlichen Stege 28 der Führungsrolle 24 kann das von der Wickelrolle 8 abrollende Kabel 2 in Richtung des oberen Trums 6 geführt werden, unabhängig von der Anzahl der Wicklungen des Kabels 2 um den Wickelkern 15 der Wickelrolle 8.

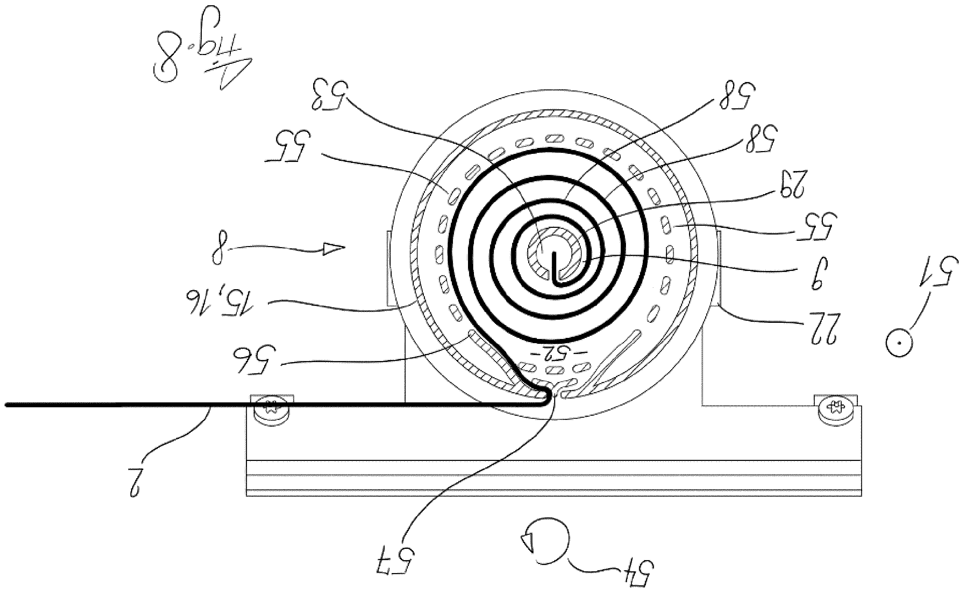

Figur 8 zeigt eine offene Wickelrolle 8 mit einer sichtbaren Kabelführung. Das Kabel 2 ist von außen in Pfeilrichtung 51 in den Innenraum 52 der Wickelrolle 8 geführt. Dazu ist das Kabel 2 in die hohle Achse 9 eingeführt, welche einen Schlitz 53 in der Wandung aufweist, durch die das Kabel 2 in den Innenraum 52 geführt ist. Dort ist das Kabel 2 in Pfeilrichtung 54 spiralförmig um die Achse 9 geführt, bis es in Kontakt mit kreisbogenartig angeordneten Stegen 55 kommt, welche den inneren Wickelraum begrenzen. In dem hier gezeigten Beispiel ist das Kabel gegen den Uhrzeigersinn gewickelt.

In Richtung der Montageplatte 22 gehen diese Stege 55 in einen Führungsarm 56 über, der eine Führung des Kabels 2 aus dem Innenraum 52 vereinfacht. Der Führungsarm 56 bildet zusammen mit einer Zuführspitze 57 eine Ausleitung des Kabels aus dem Innenraum 52, von wo das Kabel auf den Außenumfang 16 der Wickelrolle 8 übergeht. In dem gezeigten Beispiel nach Figur 8 ist das Kabel zwischen Führungsarm 56 und Zuführspitze 57 eingeklemmt, so dass es nicht vom Innenraum 52 nach Außen gezogen werden kann.

Der Außenumfang 16 bildet den äußeren Wickelkern 15, auf dem sich das Kabel 2 bei einer Drehung der Wickeltrommel 8 in Pfeilrichtung 54 aufwickeln kann.

Dreht sich die Wickeltrommel 8 in Pfeilrichtung 54 vergrößert sich der Abstand der einzelnen Wicklungen 58 im Innenraum 52 zueinander, bis diese Ausdehnung von den Stegen 55 gebremst wird und sich die Wicklungen 58 im Bereich der Stege 55 wieder annähern, d.h. der Abstand zwischen den Wicklungen wird wieder verringert. Gleichzeitig wickelt sich das Kabel 2 auf den Außenumfang 16 der Wickelrolle 8 auf, bis die maximale Öffnung der Schiebeflügel 3, 4 erreicht ist. In dem hier gezeigten Beispiel wickelt sich das Kabel 2 gegen den Uhrzeigersinn um den Wickelkern 15.

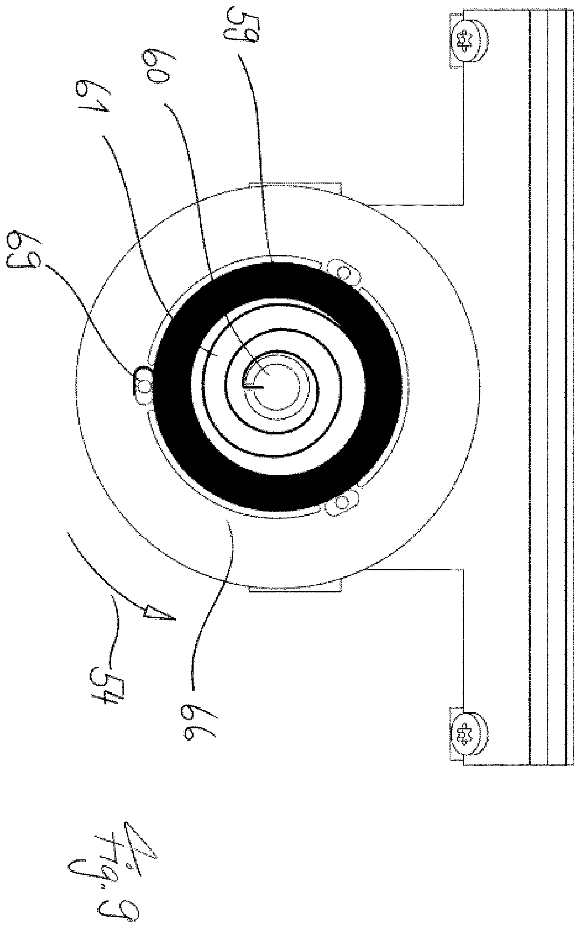

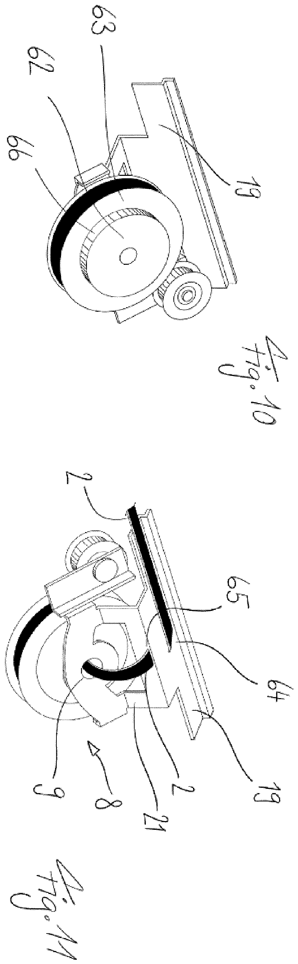

Wie in Figur 9 gezeigt, wird bei dieser Wickelbewegung gleichzeitig die Triebfeder 59 gespannt, die mit ihrem inneren Fortsatz 60 ebenfalls mit der Achse 9 verbunden ist und sich in einer auf den Innenraum 52 aufgesetzten zweiten Ebene der Wickelrolle 8, in einem Triebfederraum 61 befindet. Dieser Triebfederraum 61 kann von dem in Figur 10 gezeigten Deckel 62 verschlossen werden und weist eine kreisförmige Umrandung 66 auf, die von einzelnen Schraubaufnahmen 69 unterbrochen ist.

Aus Figur 10 ergibt sich ebenfalls, dass sich der Triebfederraum 61 eine Ebene oberhalb der Ebene befindet, in welcher sich auch der Innenraum 52 der Wickelrolle 8 befindet, welcher durch den Deckel 63 verschlossen ist, auf dem die Triebfeder 59 angeordnet ist.

Figur 11 zeigt nochmals die Zuführung des Kabels 2 in Richtung der Wickelrolle 8. Dabei wird das Kabel 2 entlang der horizontalen Montageplatte 19 geführt und durch einen Kreuzschlitz 64 in der Montageplatte 19 und anschließend einem einfachen Schlitz 65 in den Schenkel 21 geleitet, bis es durch die Achse 9 hindurch in das Innere der Wickelrolle 8 gelangt.

Figur 12 zeigt eine Explosionsansicht der Wickelrolle 8. In axialer Richtung bedeckt der Deckel 62 den Triebfederraum 61, liegt auf der Umrandung 66 auf und kann mittels Schrauben 68 mit diesem verschraubt werden.

Die Umrandung 66 ist auf dem Deckel 63 angeordnet. Der Deckel 63 sowie der gegenüberliegende Deckel 70 der Wickelrolle 8 sind als Kreisfläche ausgebildet, deren Ränder die Stege 17 bilden. Zwischen den Stegen 17 kann das Kabel 2 auf dem äußeren Wickelkern 15 aufgewickelt werden.

Am Deckel 70 weist die Wickelrolle 8 einen konischen Anschlussbereich 14 auf, mit kreisförmig angeordneten Aussparungen 13, durch die einzelne Rastarme 12 hindurchgreifen.

Diese Rastarme 12 dienen zur Aufnahme des Lagers 11, welches auf der Achse 9 gelagert ist. Die Rastarme weisen zudem eine Rastfunktion auf, durch die die Wickelrolle 8 einfach aufgesteckt und fixiert werden kann. Bevorzugt hintergreifen die Enden der Rastarme 12 das Lager 11.

Die Welle 9 weist zwei verschiedene Durchmesser auf, welche jeweils einer Mantelfäche 10a, b zugeordnet sind. Dabei ragt die Mantelfläche 10a mit ihrem größeren Durchmesser in den Innenraum 52 und die Mantelfläche 10b, mit ihrem kleineren Durchmesser in den Wickelraum 61 der Triebfeder 59. Zur Einführung der Welle 9 weist der konische Anschlussbereich eine zentrale Öffnung 41 auf.

Die Mantelfläche 10a bildet den inneren Wickelkern der Wickelrolle 8 und weist den in Figur 8 gezeigten Schlitz 53 auf, durch den das Kabel 2 geführt ist.

Die Mantelfläche 10b weist ebenfalls einen Schlitz 71 auf, in dem der Fortsatz 60 der Triebfeder 59 aufgenommen ist und so eine Drehung der Achse 9 direkt auf die Spannung der Triebfeder 59 wirkt.

### Zeichnungslegende

- 1: Kabelrollmechanismus
- 2: Kabel
- 3: Türflügel
- 4: Türflügel
- 5: Antriebsriemen
- 6: oberes Trum
- 7: unteres Trum
- 8: Wickelrolle
- 9: Achse
- 10a, 10b: Mantelfläche
- 11: Lager
- 12: Rastarme
- 13: Aussparung
- 14: Anschlussbereich
- 15: äußerer Wickelkern
- 16: Außenumfang
- 17: Steg
- 18: Aufhängung
- 19: Montageplatte
- 20: Schraubverbindung
- 21: Schenkel
- 22: Montageplatte
- 23: Achse
- 24: Führungsrolle
- 25: Achse
- 26: Aufhängung
- 27: Abrollfläche
- 28: Steg
- 29: innerer Wickelkern
- 30: Profilschiene
- 31: Profilschiene
- 32: Verbindungskabel
- 33: Steckerelement
- 34: Steckerelement
- 35: Laufwagen
- 36: Laufwagen
- 37: Befestigungsklammer
- 38: Kabelschlaufe
- 39: Pfeilrichtung
- 40: Pfeilrichtung
- 41: Öffnung
- 42a,b: Koppelstelle
- 43: Laufrolle
- 44: Umlenkrolle
- 45: Pfeilrichtung
- 46: Umlenkpunkt
- 47: Rollenaufnahme
- 48: Rollenaufnahme
- 49: Rollenaufnahme
- 50: Rollenaufnahme
- 51: Pfeilrichtung
- 52: Innenraum
- 53: Schlitz
- 54: Pfeilrichtung
- 55: Steg
- 56: Führungsarm
- 57: Zuführspitze
- 58: Wicklung
- 59: Triebfeder
- 60: Fortsatz
- 61: Triebfederraum
- 62: Deckel
- 63: Deckel
- 64: Kreuzschlitz
- 65: Schlitz
- 66: Umrandung
- 67: Steckerelement
- 68: Schraube
- 69: Schraubaufnahme
- 70: Deckel
- 71: Schlitz

## Patentansprüche

1. Wickelrolle (8) zur Auf- und Abwicklung eines elektrische Energie und/ oder Signale übertragenden Kabels (2) einer Schiebetüranlage, wobei das Flachbandkabel (2) eine stationäre Steuerungseinrichtung mit mindestens einem bewegbar gelagerten Türflügel_{[SJ1]} (3, 4) elektrisch leitfähig verbindet, **dadurch gekennzeichnet, dass** der Schiebetüranlage ein Elektromotor zugeordnet ist, der auf einen in Öffnungs- und Schließrichtung angetriebenen Antriebsriemen (5) für den Verschiebeantrieb der Türflügel (3, 4) arbeitet, und dass der Antriebsriemen (5) als Abrollantrieb für das Flachbandkabel (2) ausgebildet ist.

2. Wickelrolle (8) nach Anspruch 1, **dadurch gekennzeichnet, dass** die Aufwicklung des Kabels (2) in der Wickelrolle (8) mittels eines Kraftspeichers erfolgt.

3. Wickelrolle (8) nach Anspruch 1 oder 2, **dadurch gekennzeichnet, dass** für den Abrollantrieb des Kabels (2) das obere Trum (6) des Antriebsriemens (5) mit einem ersten Abschnitt des Kabels (2) verbunden ist und dass das untere Trum (7) des Antriebsriemens (5) mit einem Ende des Kabels (2) verbunden ist.

4. Wickelrolle (8) nach einem der Ansprüche 1 bis 3, **dadurch gekennzeichnet, dass** die Wickelrolle (8) einen äußeren und einen inneren Wickelkern (15, 29) aufweist, auf denen das Kabel (2) je nach Öffnungs- oder Schließbewegung des mindestens einen Türflügels (3, 4) auf- oder abwickelbar ist.

5. Wickelrolle (8) nach Anspruch 3 oder 4, **dadurch gekennzeichnet, dass** Kabel (2) zwischen dem äußeren und dem inneren Wickelkern (15, 29) fixiert ist.

6. Wickelrolle (8) nach einem der Ansprüche 3 bis 5, **dadurch gekennzeichnet, dass** das andere Ende des Kabels (2) auf der zentralen feststehenden Achse (9) des Wickelkerns (29) befestigt ist und danach außen geführt ist.

7. Wickelrolle (8) nach Anspruch 6, **dadurch gekennzeichnet, dass** der innere Wickelkern (29) durch eine hohle Achse (9) gebildet ist, durch die das Kabel (2) hindurchgeführt ist.

8. Wickelrolle (8) nach einem der Ansprüche 1 bis 7, **dadurch gekennzeichnet, dass** die Wickelrolle (8) im Bereich eines sich in Längsrichtung des Antriebsriemens (5) erstreckenden Tragprofils (31) montiert ist.

9. Wickelrolle (8) nach einem der Ansprüche 1 bis 3, **dadurch gekennzeichnet, dass** die Wickelrolle (8) schräg gegenüber dem mindestens einem Schiebetürflügel (3, 4) montiert ist.

10. Wickelrolle (8) nach einem der Ansprüche 1 bis 9, **dadurch gekennzeichnet, dass** das Kabel (2) auf dem Antriebsriemen (5) aufliegt und kraftübertragend mit diesem verbunden ist.

11. Wickelrolle (8) nach einem der Ansprüche 1 bis 10, **dadurch gekennzeichnet, dass** im Bereich einer Koppelstelle (42a, b) ein Verbindungskabel (32) das Kabel (2) mit einem Steckerelement (33, 34) verbindet, welches eine lösbare Verbindung zum Schiebetürflügel (3, 4) herstellt.

12. Wickelrolle (8) nach einem der Ansprüche 3 bis 11, **dadurch gekennzeichnet, dass** sich die Koppelstelle (42a) am oberen Trum (6) befindet.

13. Wickelrolle (8) nach einem der Ansprüche 3 bis 11, **dadurch gekennzeichnet, dass** das Kabel (2) zusammen mit dem Antriebsriemen (5) um eine Umlenkrolle (44) geführt ist und sich eine zweite Koppelstelle (42b) am unteren Trum (7) befindet.

14. Wickelrolle (8) nach einem der Ansprüche 1 bis 13, **dadurch gekennzeichnet, dass** zwischen Wickelrolle (8) und Antriebsriemen (5) eine Führungsrolle (24) oder ein unbewegliches Führungselement drehbar gelagert ist, über die das Kabel (2) geführt ist.

15. Wickelrolle (8) nach einem der Ansprüche 1 bis 10, **dadurch gekennzeichnet, dass** der äußere Wickelkern (15) gebildet wird durch den Außenumfang (16) der Wickelrolle (8) und seitlichen, in radialer Richtung hervorstehenden, Krägen (17) begrenzt wird.

## Geänderte Patentansprüche

### Geänderte Patentansprüche gemäss Regel 137(2) EPÜ.

1. Kabelrollmechanismus (1) zur Auf- und Abwicklung eines elektrische Energie und/ oder Signale übertragenden Kabels (2) einer Schiebetüranlage mittels einer Wickelrolle (8), wobei das Kabel (2) ein Flachbandkabel ist und eine stationäre Steuerungseinrichtung mit mindestens einem bewegbar gelagerten Türflügel (3, 4) elektrisch leitfähig verbindet, wobei der Schiebetüranlage ein Elektromotor zugeordnet ist, der auf einen in Öffnungs- und Schließrichtung angetriebenen Antriebsriemen (5) für den Verschiebeantrieb der Türflügel (3, 4) arbeitet, und dass der Antriebsriemen (5) als Abrollantrieb für das Kabel (2) ausgebildet ist **dadurch gekennzeichnet, dass** das Kabel (2) auf dem Antriebsriemen (5) aufliegt und kraftübertragend mit diesem verbunden ist.

2. Kabelrollmechanismus (1) nach Anspruch 1, **dadurch gekennzeichnet, dass** der Antriebsriemen (5) mit zwei Türflügeln (3, 4) einer Schiebetüranlage verbunden ist.

3. Kabelrollmechanismus (1) nach Anspruch 1 oder 2, **dadurch gekennzeichnet, dass** die Aufwicklung des Kabels (2) in der Wickelrolle (8) mittels eines Kraftspeichers erfolgt.

4. Kabelrollmechanismus (1) nach einem der Ansprüche 1 bis 3, **dadurch gekennzeichnet, dass** für den Abrollantrieb des Kabels (2) das obere Trum (6) des Antriebsriemens (5) mit einem ersten Abschnitt des Kabels (2) verbunden ist und dass das untere Trum (7) des Antriebsriemens (5) mit einem Ende des Kabels (2) verbunden ist.

5. Kabelrollmechanismus (1) nach einem der Ansprüche 1 bis 4, **dadurch gekennzeichnet, dass** die Wickelrolle (8) einen äußeren und einen inneren Wickelkern (15, 29) aufweist, auf denen das Kabel (2) je nach Öffnungs- oder Schließbewegung des mindestens einen Türflügels (3, 4) auf- oder abwickelbar ist.

6. Kabelrollmechanismus (1) nach Anspruch 4 oder 5, **dadurch gekennzeichnet, dass** Kabel (2) zwischen dem äußeren und dem inneren Wickelkern (15, 29) fixiert ist.

7. Kabelrollmechanismus (1) nach einem der Ansprüche 4 bis 6, **dadurch gekennzeichnet, dass** das andere Ende des Kabels (2) auf der zentralen feststehenden Achse (9) des Wickelkerns (29) befestigt ist und danach außen geführt ist.

8. Kabelrollmechanismus (1) nach Anspruch 7, **dadurch gekennzeichnet, dass** der innere Wickelkern (29) durch eine hohle Achse (9) gebildet ist, durch die das Kabel (2) hindurchgeführt ist.

9. Kabelrollmechanismus (1) nach einem der Ansprüche 1 bis 8, **dadurch gekennzeichnet, dass** die Wickelrolle (8) im Bereich eines sich in Längsrichtung des Antriebsriemens (5) erstreckenden Tragprofils (31) montiert ist.

10. Kabelrollmechanismus (1) nach einem der Ansprüche 1 bis 9, **dadurch gekennzeichnet, dass** die Wickelrolle (8) schräg gegenüber dem mindestens einem Schiebetürflügel (3, 4) montiert ist.

11. Kabelrollmechanismus (1) nach einem der Ansprüche 1 bis 10, **dadurch gekennzeichnet, dass** im Bereich einer Koppelstelle (42a, b) ein Verbindungskabel (32) das Kabel (2) mit einem Steckerelement (33, 34) verbindet, welches eine lösbare Verbindung zum Schiebetürflügel (3, 4) herstellt.

12. Kabelrollmechanismus (1) nach einem der Ansprüche 3 bis 11, **dadurch gekennzeichnet, dass** sich die Koppelstelle (42a) am oberen Trum (6) befindet.

13. Kabelrollmechanismus (1) nach einem der Ansprüche 3 bis 11, **dadurch gekennzeichnet, dass** das Kabel (2) zusammen mit dem Antriebsriemen (5) um eine Umlenkrolle (44) geführt ist und sich eine zweite Koppelstelle (42b) am unteren Trum (7) befindet.

14. Kabelrollmechanismus (1) nach einem der Ansprüche 1 bis 13, **dadurch gekennzeichnet, dass** zwischen Wickelrolle (8) und Antriebsriemen (5) eine Führungsrolle (24) oder ein unbewegliches Führungselement drehbar gelagert ist, über die das Kabel (2) geführt ist.

15. Kabelrollmechanismus (1) nach einem der Ansprüche 1 bis 10, **dadurch gekennzeichnet, dass** der äußere Wickelkern (15) gebildet wird durch den Außenumfang (16) der Wickelrolle (8) und seitlichen, in radialer Richtung hervorstehenden, Krägen (17) begrenzt wird.
